# EUROPEAN PATENT APPLICATION

(11) **EP 4 016 325 A1**
(43) Date of publication of application: **22.06.2022**
(21) Application number: 20383109.4
(22) Date of filing: 17.12.2020
(51) Int. Cl.: G06F 16/2458

(54) **A COMPUTER-IMPLEMENTED METHOD FOR DETECTING ANOMALOUS BEHAVIORS OF ELECTRONIC DEVICES AND COMPUTER PROGRAMS THEREOF**

(71) Applicant: Telefonica Digital España, S.L.U., 28013 Madrid (ES)
(72) Inventor: Caros Roca, Mariona, 28013 Madrid (ES); Lutu, Andra, 28013 Madrid (ES); Serra Julia, Joan, 28013 Madrid (ES); Perino, Diego, 28013 Madrid (ES)
(74) Representative: Carlos Hernando, Borja

(57) **Abstract**

A method for detecting anomalous behaviors of electronic devices is proposed. The method comprises receiving raw signaling traffic, in the form of records, generated by electronic devices; transforming the received traffic into features by encoding some fields of the records; generating a data matrix of features for each device, each row representing an encoded feature and each column representing a counter of the number of occurrences of each encoded feature; computing a signaling traffic volume metric for each device considering the number of records generated by each device during; performing a grouping process to the devices using the computed signaling traffic volume metric to allocate the devices having similar signaling traffic patterns into a same cluster, generating a set of clusters as a result; and identifying the devices having an anomalous behavior by applying an anomaly detection model to each set of clusters using the generated data matrix of features.

## Description

### Technical Field

The present invention is directed, in general, to the field of anomaly detection. In particular, the invention relates to a computer-implemented method, and computer programs, for detecting anomalous behaviors of electronic devices, in particular Internet-Of-Things (loT) devices.

### Background of the Invention

loT/ machine to machine (M2M) services have significantly growth in the last years and are of great relevance to service providers since for them it is very important to guarantee connectivity and service quality to their customers, as well as identify issues in their platforms that could arm their businesses.

It is therefore critical to be able to have a solution to identify anomalous behaviors of loT devices of different customers to achieve those goals.

Scientific document *"*Deep Learning for Anomaly Detection: A Survey", Raghavendra Chalapathy and Sanjay Chawla provides a comprehensive survey of different deep learning algorithms that can be used for anomaly detection. This solution also includes autoencoders. However, this document does not describe the full pipeline, and steps, of present invention.

Scientific document *"*Unsupervised machine learning for network-centric anomaly detection in IoT" Randeep Bhatia et al. similarly applies unsupervised machine learning to identify anomalous behavior of loT TCP level traffic. However, the approach this document uses for inputting the data is different from the one available to present invention and it cannot be applied to present invention's problem.

### Description of the Invention

The object of the present invention is thus to provide a method and computer programs for detecting (or identifying) anomalous behaviors of electronic devices such as loT devices. This object is fulfilled by a method with the characteristics of claim 1 and by a computer program with the features of claim 15.

Thus, embodiments of the present invention provide a method that comprises: a) receiving raw signaling traffic generated by a plurality of electronic devices, the electronic devices having communication and data transmission capabilities, the raw signaling traffic being in the form of records about traffic messages exchanged by the plurality of electronic devices with a communication network, each record comprising a set of fields; b) transforming the received raw signaling traffic into a plurality of features by encoding some of the fields of said set of fields; c) generating a data matrix of features for each computing device of the plurality of electronic devices, each row of the data matrix representing an encoded feature and each column of the data matrix representing a counter of a number of occurrences of each encoded feature every certain first period of time (e.g. every 15 or 30 minutes); d) computing a signaling traffic volume metric for each computing device taking into account the number of records generated by each computing device during a given second period of time (e.g. each day); e) performing a grouping process to the electronic devices using the computed signaling traffic volume metric in order to allocate the electronic devices having similar signaling traffic patterns into a same cluster, generating a set of clusters as a result; and f) identifying the electronic devices having an anomalous behavior by applying an anomaly detection model to each set of clusters using the generated data matrix of features.

In the present invention the raw signaling traffic can include any of Diameter Transaction Records (TDR), Call Details Records (CDR), 2G, 3G, or 4G network inputs, metadata, etc.

In an embodiment, step c) further comprises applying an ordering operation to the generated data matrix of features that selects and arranges each encoded feature according to a likelihood-of-anomaly criterion.

In an embodiment, step e) further comprises using other features in addition to the signaling traffic volume metric, for example, location information, combination of different signaling protocols volume, etc.

In an embodiment, step e) further comprises applying a Principal Component Analysis (PCA) algorithm to each cluster of the set of clusters. In addition, a Gaussian Mixture Model (GMM) with a given number of components is applied.

In an embodiment, dimensionality reduction is performed by computing mean and standard deviation statistics on the signaling traffic volume metric.

In an embodiment, the method also estimates a compressed representation of the signaling traffic by training the anomaly detection model, and computes an anomaly score for each of the electronic devices by comparing a new estimated compressed representation with a previous learned one.

In an embodiment, the anomaly detection model comprises a bow-tie architecture variational autoencoder including an encoder and a decoder. More in particular, the bow-tie architecture Variational Autoencoder can implement a neural network such as a Fully Connected Neural Network (FCNN), a Recurrent Neural Network (RNN), or a Convolutional Neural Network (CNN).

In an embodiment, the encoder and decoder are formed by four connected layers with Rectified Linear Activation Functions (ReLU).

In an embodiment, the encoder and decoder are formed by three convolutional layers with 3 x 3 kernels and a stride fixed to 1. In other embodiments, other kernel sizes are used, for example 22 x 3, 3 x 8, etc. Each convolutional layer can also include a batch normalization layer, a max pooling layer, and a Leaky Rectified Linear Activation Function (LeakyReLU) layer. The encoder also includes two-fully connected output layers for mean and variance.

In an embodiment, a 2D transposed convolution operator with padding on the encoded data is applied to the decoder.

In an embodiment, the encoder and decoder comprise a Long short-term memory (LSTM) layer with a given number of units.

In an embodiment, step e) further applies k-means or an Agglomerative Hierarchical Clustering algorithm to each cluster of the set of clusters.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, present invention provides a solution to identify anomalous behavior (i.e., deviation from "normal" behavior) of one or more loT devices belonging to a given user of an loT platform (e.g., KITE, TIWS IPX roaming service). Given as input signaling traffic generated by loT devices of a given customer (e.g., TDR, CDRs, etc.), the invention is able to identify "normal" behavior of loT devices and identify one or more devices deviating from this "normal behavior", that are considered anomalies. The invention convers: i) the way the input data is manipulated; ii) an approach to cluster devices with similar traffic patterns and model their "normal" behavior; iii) the way the anomalous loT devices are identified.

### Brief Description of the Drawings

The previous and other advantages and features will be more fully understood from the following detailed description of embodiments, with reference to the attached figures, which must be considered in an illustrative and non-limiting manner, in which:

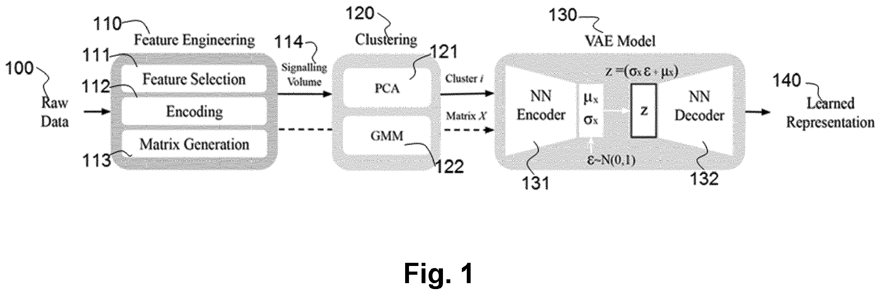

Fig. 1 schematically illustrates the architecture and different steps that can be implemented by present invention to detect anomalous behaviors of electronic devices, according to an embodiment.

### Detailed Description of Preferred Embodiments

Present invention proposes an unsupervised method for anomaly detection of devices having communication and data transmission capabilities such as loT devices, which is agnostic to the device usage. The key idea of the proposed model is to learn (on a set of training data) the normal network behavior by estimating a low dimension representation of the signaling messages exchanged by the loT devices. Then, on a set of testing data the solution is able to identify loT devices deviating from "normal" behavior.

Fig. 1 shows an embodiment of the proposed architecture of the invention. First, raw signaling traffic 100 is transformed into effective features for the anomaly detection approach. This is performed by means of the Feature Engineering block 110 and includes the cleaning 111; encoding 112; and generating of an input data matrix 113.

The invention also counts the signaling traffic volume 114 per loT device, to further use in the next step/block (Clustering block 120).

Second, the invention generates a set of clusters grouping loT devices with similar behavior in terms of high level signaling trend using the traffic volume metric 114. Note that if an loT device was already present in the "training" data set, the cluster is known and this step is not required in the "testing" phase.

Third, for each cluster the invention applies (Anomaly Detection block 130) an anomaly detection model using the computed features. In the "training" stage the model is trained to estimate a low dimension representation of the traffic messages. Particularly, the anomaly detection model relies on a generative model (e.g. bow-tie architecture VAE), which consumes the encoded matrices for learning a low dimension representation (z in Fig. 1) of each group of loT devices. The model is trained so that the latent representation effectively represents the normal behavior of devices. At the inference stage the method computes an anomaly score for each of the loT devices by comparing new representations to the learned one. This offers the opportunity to detect anomalies caused by different unknown reasons, indistinct to the device purpose and without requiring any labeled data.

The bow-tie Variational Autoencoder of Fig. 1 particularly consists of two sub-networks, namely an encoder 131 and a decoder 132. This architecture uses a bottleneck to learn a low-dimensional (or compressed) representation space z of the training data x. The method can implement different VAE models containing different neural networks (Fully Connected Neural Networks (FCNN), Recurrent Neural Networks (RNN) and Convolutional Neural Networks (CNN)), among others.

Following, the different blocks/steps of Fig. 1 will be detailed.

The Feature Engineering block 110 transforms the raw input data 100 into effective features for the model. Input data 100 comes in the form of records about traffic messages exchanged by the loT devices with the network.

As an example, in one embodiment, the input can be Diameter Transaction Records - TDR of 4G network. In this embodiment, using the domain knowledge of the operations team the input fields of every record that are used are: device identifier, start and end time of the record, duration, violation, result code and request type (cf. Table 1).

For every record, the invention can keep as raw values an identifier of the loT device (for instance the IMSI), as well as the "start" and "end" time of the record. All the other fields of every record are ordinal-encoded 112 and used as features to generate the input matrices 113 for the model as follow.

The method generates a matrix 113 for every loT device, particularly per day. A row of the matrix 113 represents an encoded feature, and every column is a counter of the number of occurrences of each value every certain period of time, for example every M minutes (e.g., M=15, 30, 60 minutes, among others). This representation of the data enables the model to learn the distribution of signaling data per loT device and per day.

Then, the method, in some embodiments, can order the values of the features in a particular manner so it can take advantage of the hierarchical pattern learning of the models that are used in the last step of the proposed framework. The method places in the first rows the values of the fields that are not considered anomalous, and leaves in the last rows the less probable values that could indicate errors in the log and most likely could point out the presence of an anomaly. Finally, the values of the matrices 113 can be scaled between 0 and 1 in order to improve neural network stability and modeling performance at training step.

For example, in the embodiment of the TDR of 4G network, fields of every record are encoded as described in Table 1, for a total of D=22 input features. An example of matrix that is generated for an loT device is reported Table 2, and counts D=22 rows and N= 96 columns.

For every loT device, the method also generates a counter of the number of signaling records per day (to be used by the clustering block 120).

**Table 1: TDR 4G embodiment fields and encoding**

| Fields | Values | Encoding | Row |
|---|---|---|---|
| Duration[ms] | - | 0 | 0 |
| | 0 ≤ value < 2500 | 1 | 1 |
| | 2500 ≤ value < 6000 | 2 | 11 |
| | 6000 ≤ value | 3 | 12 |
| Violation | 0 | 0 | 2 |
| | 1 | 1 | 13 |
| Result Code | - | 0 | 3 |
| | 11009 (Informational) | 1 | 4 |
| | 2001 (Success) | 2 | 5 |
| | 3*** (Errors) | 3 | 14 |
| | 4*** (Transient Failures) | 4 | 15 |
| | 5*** (Permanent Failures) | 5 | 16 |
| Request Type | - | 0 | 6 |
| | 316 (Update-Location) | 1 | 7 |
| | 317 (Cancel-Location) | 2 | 8 |
| | 318 (Auth-Information) | 3 | 9 |
| | 323 (Notify) | 4 | 10 |
| | 321 (Purge-UE) | 5 | 17 |
| | 319 (Insert-Subscriber-Data) | 6 | 18 |
| | 320 (Delete-Subscriber-Data) | 7 | 19 |
| | 257 (Capabilities-Exchange) | 8 | 20 |
| | 258 (Re-Auth) | 8 | 20 |
| | others | 9 | 21 |

**Table 2: TDR 4G embodiment matrix example**

| date | 00:00 01/01 | 00:15 01/01 | ... | 23:45 01/01 |
|---|---|---|---|---|
| Feat. 1 | 120 | 50 | ... | 20 |
| Feat. 2 | 5 | 5 | ... | 0 |
| ... | ... | | ... | ... |
| Feat. n | 125 | 60 | ... | 30 |

With regard to the clustering block 120, particularly this is based on an unsupervised approach to group loT devices with similar traffic volumes 114 before ingesting them into the anomaly detection block 130. The clustering is performed before training the model, as every loT device needs to be assigned to a cluster. At inference, clustering will be required if loT devices have increased in number or changed its behavior. Otherwise the learned distributions of the clusters would not correspond to the loT devices being tested.

In an embodiment, the only feature that is used for clustering is the amount of records per loT device and day, which is computed in the pre-processing step implemented by the Feature Engineering block 110. Then, the dimensional space is reduced by using PCA 121 to eliminate noisy data dimensions. PCA 121 uses an orthogonal coordinate transformation to perform a change of basis on the data. Each of the new direction vectors, are commonly referred to as a principal component. In one embodiment, the method keeps only the first X principal components as they preserve most of the data variation (for instance X=3 in one embodiment). Then, the method can apply the clustering model (in an embodiment this consists in a GMM 122 with 3 components). The method selects the number of clusters based on its homogeneity and volume to avoid very specific clusters having few samples.

In the particular case of using PCA-GMM, as shown in Fig. 1, the GMM 122 assumes that regular data is generated from a mixture of Gaussian distributions with unknown parameters. The parameters of the distributions are fit using an expectation-maximization algorithm which maximizes the likelihood of the data points. The method assigns to each data point a probability of being generated by the distribution, if the probability is very low that is an indication of being an anomaly.

The anomaly detection block 130 implements an anomaly detection model to estimate a low dimension (or compressed) representation latent space of the traffic messages in the "training" stage and to identify loT devices with anomalous behavior in the "testing" stage. As said before, the anomaly detection model particularly relies on a bow-tie Variational Autoencoder (VAE).

The bow-tie VAE of Fig. 1 particularly consists of two sub-networks, namely an encoder 131 and a decoder 132. This architecture uses a bottleneck to learn a low-dimensional (or compressed) representation space z of the training data x. The method can implement different VAE models containing different neural networks (Fully Connected Neural Networks (FCNN), Recurrent Neural Networks (RNN) or Convolutional Neural Networks (CNN)), among others.

In an embodiment, a FC-VAE approach is used in which both encoder 131 and decoder 132 networks are composed of 4 fully connected layers with ReLU activation functions.

In another embodiment, a CNN-VAE approach is used. In this case, the model contains 3 convolutional layers with 3 x 3 kernels and a stride fixed to 1, in both encoder 131 and decoder 132 networks. Each convolutional layer is followed by a batch normalization layer to help stabilize training and a LeakyReLU activation layer. In the encoder 131, the CNN layers are followed by two fully-connected output layers (for mean and variance), used to compute the KL divergence loss and sample latent variable z. In the decoder 132, for up-sampling a 2D transposed convolution operator with padding on the encoded data is applied. In yet another embodiment, a LSTM-VAE approach is used. In this model the method uses a LSTM layer of 512 in the encoder 131 followed by two fully-connected layers to compute the statistics of the latent space, as explained above. The decoder 132 contains a LSTM of the same size.

The different implementations of the present invention can differ on several aspects. For example, they can differ in the input data 100 that is used and the resulting encoding of the data (list is not exhaustive): Diameter Transaction Records (TDR); Call Details Records (CDRs); 2G, or 3G, or 4G network input; additional metadata available; or any combination of the above input. Moreover, they can differ in the technique that is used for clustering (list is not exhaustive): it is possible to use PCA coupled with GMM, it is possible to use aggregate per device metrics coupled with GMM; it is also possible to use k-means or Agglomerative Hierarchical Clustering. Likewise, they can differ in the model that is used for anomaly detection as explained above.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Nonvolatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A computer-implemented method for detecting anomalous behaviors of electronic devices, the method comprising:
a) receiving raw signaling traffic (100) generated by a plurality of electronic devices, the electronic devices having communication and data transmission capabilities, the raw signaling traffic (100) being in the form of records about traffic messages exchanged by the plurality of electronic devices with a communication network, each record comprising a set of fields;
b) transforming the received raw signaling traffic (100) into a plurality of features by encoding (112) some of the fields of said set of fields;
c) generating a data matrix of features (113) for each computing device of the plurality of electronic devices, each row of the data matrix (113) representing an encoded feature and each column of the data matrix representing a counter of a number of occurrences of each encoded feature every certain first period of time;
d) computing a signaling traffic volume metric (114) for each computing device taking into account a number of records generated by each computing device during a given second period of time;
e) performing a grouping process to the electronic devices using the computed signaling traffic volume metric (114) in order to allocate the electronic devices having similar signaling traffic patterns into a same cluster, generating a set of clusters as a result; and
f) identifying the electronic devices having an anomalous behavior by applying an anomaly detection model to each set of clusters using the generated data matrix of features (113).

2. The method of claim 1, wherein step c) further comprises applying an ordering operation to the generated data matrix of features (113) that selects and arranges each encoded feature according to a likelihood-of-anomaly criterion.

3. The method of any one of the previous claims, wherein step e) further comprises applying a Principal Component Analysis, PCA, algorithm (121) to each cluster of the set of clusters.

4. The method of claim 3, further comprising applying a Gaussian Mixture Model, GMM, (122) with a given number of components.

5. The method of any one of previous claims, further comprising:
estimating a compressed representation of the signaling traffic (100) by training the anomaly detection model; and
computing an anomaly score for each of the electronic devices by comparing a new estimated compressed representation with a previous learned one.

6. The method of any one of the previous claims, wherein the anomaly detection model comprises a bow-tie architecture variational autoencoder including an encoder (131) and a decoder (132).

7. The method of claim 6, wherein the bow-tie architecture Variational Autoencoder comprises implementing at least one neural network.

8. The method of claim 7, wherein the neural network includes a Fully Connected Neural Network, FCNN, a Recurrent Neural Network, RNN, or a Convolutional Neural Network, CNN.

9. The method of claim 6, wherein the encoder (131) and decoder (132) are formed by four connected layers with Rectified Linear Activation Functions, ReLU.

10. The method of claim 6, wherein the encoder (131) and decoder (132) are formed by three convolutional layers with 3 x 3 kernels and a stride fixed to 1, wherein each convolutional layer at least further comprises a batch normalization layer and a Leaky Rectified Linear Activation Function, LeakyReLU, layer, the encoder (131) further comprising a two-fully connected output layers for mean and variance.

11. The method of claim 10, further comprising applying to the decoder (132) a 2D transposed convolution operator with padding on the encoded data.

12. The method of claim 6, wherein the encoder (131) and decoder (132) comprise a Long short-term memory, LSTM, layer with a given number of units.

13. The method of any one of the previous claims, wherein the raw signaling traffic (100) comprises at least one of: Diameter Transaction Records; Call Details Records; 2G, 3G, or 4G network inputs; metadata.

14. The method of claim 1, wherein step e) further comprises applying k-means or an Agglomerative Hierarchical Clustering algorithm to each cluster of the set of clusters.

15. A non-transitory computer readable medium comprising code instructions which when run on an apparatus causes the apparatus to perform the method according to claims 1 to 14.
